# EUROPEAN PATENT SPECIFICATION

(11) **EP 4 309 973 B1**
(45) Date of publication and mention of the grant of the patent: **05.08.2026**
(21) Application number: 23183827.7
(22) Date of filing: 06.07.2023
(51) Int. Cl.: B62D 5/00, B62D 5/04, B62D 15/02

(54) **STEERING CONTROL SYSTEM**
LENKSTEUERUNGSSYSTEM
SYSTÈME DE COMMANDE DE DIRECTION

(30) Priority: 08.07.2022 JP 2022110595
(43) Date of publication of application: 24.01.2024
(73) Proprietor: JTEKT CORPORATION, Kariya-shi, Aichi-ken, 448-8652 (JP)
(72) Inventor: NAGASHIMA, Yugo, Kariya-shi, Aichi-ken, 448-8652 (JP); FUJITA, Yuji, Kariya-shi, Aichi-ken, 448-8652 (JP); KAJISAWA, Yuuta, Kariya-shi, Aichi-ken, 448-8652 (JP); HASEGAWA, Kazuma, Kariya-shi, Aichi-ken, 448-8652 (JP); KOUDAI, Takashi, Kariya-shi, Aichi-ken, 448-8652 (JP); YAMASHITA, Masaharu, Toyota-shi, Aichi-ken, 471-8571 (JP); SATOU, Atsushi, Toyota-shi, Aichi-ken, 471-8571 (JP); YAMASHITA, Yosuke, Toyota-shi, Aichi-ken, 471-8571 (JP); IIDA, Kazuaki, Toyota-shi, Aichi-ken, 471-8571 (JP); TAKAYAMA, Shintaro, Toyota-shi, Aichi-ken, 471-8571 (JP); HAYASHI, Toyohiro, Kariya-city, Aichi-pref., 448-8661 (JP); TOMIZAWA, Hiroki, Kariya-city, Aichi-pref., 448-8661 (JP); NAKAJIMA, Nobuyori, Kariya-city, Aichi-pref., 448-8661 (JP); TANABE, Hayaki, Kariya-city, Aichi-pref., 448-8661 (JP); IWANA, Takeshi, Kariya-city, Aichi-pref., 448-8661 (JP)
(74) Representative: Winter, Brandl - Partnerschaft mbB

(56) References cited:
- JP-A- 2006 051 922
- JP-A- 2021 109 495
- US-A1- 2018 124 030

## Description

### BACKGROUND OF THE INVENTION

### 1. Field of the Invention

The present invention relates to a steering control system.

### 2. Description of Related Art

There are conventional steering system of so-called steer-by-wire kind in which power transmission between a steering wheel and turning wheels is cut off. For example, the steer-by-wire system of Japanese Unexamined Patent Application Publication No. 2021-70431 (JP 2021-70431 A) has a reaction force actuator and a turning actuator. The reaction force actuator generates a steering reaction force applied to a steering shaft. The turning actuator generates a turning force that turns turning wheels.

The reaction force actuator and the turning actuator each have two redundantly provided control arithmetic units and two redundantly provided motor driving units. The control arithmetic units perform arithmetic operations relating to driving control of a motor. The motor driving units generate torque based on a driving signal generated by the corresponding control arithmetic unit.

When an abnormality occurs in a first system or a second system of one of the reaction force actuator and the turning actuator, the control arithmetic unit of the actuators in the abnormal system stops the driving control of the motor. When an abnormality occurs in inter-system communication of the first system or the second system, the control arithmetic unit of the actuators in the abnormal system stops the driving control of the motor. The control arithmetic unit of the normal system in the actuators continues the driving control of the motor.
A steering control system having the features of the preamble of claim 1 is known from JP 2006 051922 A. US 2018/124030 A1 relates to vehicle communication systems and, more particularly, to systems and methods of need based authentication of communication packets within a controller area network bus communication system of a vehicle.

### SUMMARY OF THE INVENTION

In the case where the driving control of the motor is continued by the control arithmetic unit of the normal system, there is a concern as follows. The control arithmetic unit of the normal system can be reset due to, for example, a decrease in a power source voltage. In this case, appropriate control of the motor that is the control target of the reset control arithmetic unit may be hindered. Thus, it is required to appropriately respond to reset of the control arithmetic unit.

A steering control system according to an aspect of the present invention has a plurality of control circuits configured to control a reaction force motor and a turning motor in coordination with one another, the reaction force motor generating a steering reaction force applied to a steering wheel from which power transmission to turning wheels of a vehicle is cut off, the turning motor generating a turning force for turning the turning wheels. When at least one control circuit among the control circuits that are operating normally is reset, the at least one control circuit that is reset is configured to execute a process for stopping travel of the vehicle upon restarting after completion of the reset.

In the case where the reaction force motor and the turning motor are controlled by a plurality of control circuits, there is a concern as follows. At least one of the control circuits that are operating normally can be reset due to, for example, a decrease in a power source voltage. In this case, appropriate control of the reaction force motor or the turning motor that is the control target of the reset control circuit may be hindered.

In this respect, according to the above-described steering control system, in the case where at least one control circuit among the control circuits that are operating normally is reset, the reset control circuit executes the process for stopping travel of the vehicle upon restarting after completion of the reset. Thus, the vehicle can be prevented from continuing to travel in a state where appropriate control of the reaction force motor or the turning motor is hindered. It is therefore possible to appropriately respond to reset of the control circuits.

In the steering control system according to the above aspect, the at least one control circuit that is reset may be configured to execute, upon restarting after completion of the reset, a process for stopping driving of the reaction force motor or the turning motor that is a control target of the at least one control circuit that is reset. A control circuit of the control circuits that is operating normally without being reset may be configured to execute, in synchronization with the at least one control circuit that is reset, a process for stopping driving of the turning motor or the reaction force motor that is a control target of the control circuit that is operating normal without being reset.

According to this steering control system, in the case where at least one control circuit among the control circuits that are operating normally is reset, the reset control circuit stops driving of the reaction force motor or the turning motor that is the control target of that control circuit upon restarting after completion of the reset. The control circuit that is operating normally without being reset stops driving of the turning motor or the reaction force motor that is the control target of that control circuit. Thus, unintended behavior of the steering wheel and the turning wheels can be prevented. It is therefore possible to appropriately respond to reset of the control circuits.

In the steering control system according to the above aspect, the control target of the at least one control circuit that is reset may be the reaction force motor, and the control target of the control circuit that is operating normally without being reset may be the turning motor.

In the steering control system according to the above aspect, the control target of the at least one control circuit that is reset may be the turning motor, and the control target of the control circuit that is operating normally without being reset may be the reaction force motor.

In the above-described steering control system, the reaction force motor may have dual-system winding sets that are a winding set of a first system and a winding set of a second system, and the turning motor may have dual-system winding sets that are a winding set of the first system and a winding set of the second system. The plurality of control circuits may include dual-system reaction force control circuits that are a reaction force control circuit of the first system and a reaction force control circuit of the second system, and dual-system turning control circuits that are a turning control circuit of the first system and a turning control circuit of the second system. The reaction force control circuit of the first system controls power supply to the winding set of the first system included in the reaction force motor, the reaction force control circuit of the second system controls power supply to the winding set of the second system included in the reaction force motor, the turning control circuit of the first system controls power supply to the winding set of the first system included in the turning motor, and the turning control circuit of the second system controls power supply to the winding set of the second system of the turning motor. In this case, each of the plurality of control circuits may be configured to have, as a driving mode of the reaction force motor and the turning motor, a single-system driving mode in which the reaction force motor and the turning motor are controlled by only the reaction force control circuit and the turning control circuit of one of the first system and the second system. In the case where the driving mode is the single-system driving mode, the at least one control circuit that is reset may be configured to execute the process when the at least one control circuit among the control circuits that are operating normally is reset.

In the above-described steering control system, the reaction force motor may have dual-system winding sets that are a winding set of a first system and a winding set of a second system, and the turning motor may have dual-system winding sets that are a winding set of the first system and a winding set of the second system. The plurality of control circuits may include dual-system reaction force control circuits that are a reaction force control circuit of the first system and a reaction force control circuit of the second system, and dual-system turning control circuits that are a turning control circuit of the first system and a turning control circuit of the second system. The reaction force control circuit of the first system controls power supply to the winding set of the first system included in the reaction force motor, the reaction force control circuit of the second system controls power supply to the winding set of the second system included in the reaction force motor, the turning control circuit of the first system controls power supply to the winding set of the first system included in the turning motor, and the turning control circuit of the second system controls power supply to the winding set of the second system of the turning motor. In this case, each of the plurality of control circuits may be configured to have, as a driving mode of the reaction force motor and the turning motor, a single-system driving mode in which the reaction force motor and the turning motor are controlled by only the reaction force control circuit and the turning control circuit of one of the first system and the second system. In the case where the driving mode is the single-system driving mode, the plurality of control circuits may be configured to execute the processes when the at least one control circuit among the control circuits that are operating normally is reset.

In the case where at least one of the reaction force control circuit and the turning control circuit of the first system or the second system that is operating in the single-system driving mode is reset, the reaction force control circuit or the turning control circuit that has been reset executes the process for stopping travel of the vehicle upon restarting after completion of the reset. Thus, in the case where the control circuit is operating in the single-system driving mode, the vehicle can be prevented from continuing to travel in a state where appropriate control of the reaction force motor or the turning motor is hindered. It is therefore possible to appropriately respond to reset of the control circuits.

In the case where at least one of the reaction force control circuit and the turning control circuit of the first system or the second system that is operating in the single-system driving mode is reset, the reaction force control circuit or the turning control circuit that has been reset stops driving of the reaction force motor or the turning motor that is the control target of that control circuit upon restarting after completion of the reset. The reaction force control circuit and the turning control circuit of the second system or the first system that are operating normally without being reset stop driving of the turning motor and the reaction force motor that are the control targets of those control circuits. Thus, unintended behavior of the steering wheel and the turning wheels can be prevented. It is therefore possible to appropriately respond to reset of the control circuits.

In the steering control system according to the above aspect, the control circuit of which a control target is the turning motor may be configured to control the turning motor such that the turning wheels turn according to an amount of rotating operation of the steering wheel. The control circuit of which a control target is the reaction force motor may be configured to execute a specified preparation process at start-up. The preparation process may include a midpoint learning process of learning a steering neutral position of the steering wheel by making the steering wheel rotate automatically through driving of the reaction force motor, and a steering angle synchronization process of correcting a rotational position of the steering wheel such that the rotational position of the steering wheel becomes a rotational position that corresponds to a turning position of the turning wheels.

It is conceivable that the control circuit of which the control target is the reaction force motor may be reset. In this case, the control circuit of which the control target is the reaction force motor executes the specified preparation process upon restarting after completion of the reset. The preparation process includes the midpoint learning process and the steering angle synchronization process. During execution of these processes, the steering wheel may rotate automatically. Meanwhile, the control circuit of which the control target is the turning motor controls the turning motor as at normal times. That is, the control circuit of which the control target is the turning motor controls the turning motor such that the turning wheels turn according to the amount of rotating operation of the steering wheel. Thus, the turning wheels may turn automatically as the steering wheel rotates automatically. Therefore, the driver of the vehicle may feel a sense of discomfort about the unintended behavior of the steering wheel and the turning wheels.

In this respect, as in the above-described steering control system, when the control circuit of which the control target is the reaction force motor is reset, the reset control circuit of which the control target is the reaction force motor executes the process for stopping travel of the vehicle upon restarting after completion of the reset. Thus, the vehicle can be prevented from continuing to travel in a state where the steering wheel and the turning wheels operate without being intended due to execution of the preparation process accompanying restart. It is therefore possible to appropriately respond to reset of the control circuits.

In the case where the control circuit of which the control target is the reaction force motor is reset, the reset control circuit stops driving of the reaction force motor that is the control target of that control circuit upon restarting after completion of the reset. The control circuit of which the control target is the turning motor stops driving of the turning motor that is the control target of that control circuit in synchronization with the control circuit of which the control target is the reaction force motor. Thus, unintended behavior of the steering wheel and the turning wheels attributable to execution of the preparation process accompanying restart can be prevented. Further, the vehicle can be prevented from continuing to travel in a state where the steering wheel and the turning wheels operate without being intended due to execution of the preparation process accompanying restart. It is therefore possible to appropriately respond to reset of the control circuits.

In the steering control system according to the above aspect, each of the control circuits may be configured to store information indicating whether control was stopped as a vehicle power source was turned off. At start-up, each of the control circuits may be configured to determine that the control circuit has not been reset when the information indicating that control was stopped as the vehicle power source was turned off is stored, and determine that the control circuit has been reset when the information indicating that control was stopped as the vehicle power source was turned off is not stored.

When reset before the vehicle power source is turned off, the control circuit cannot store the information indicating that control was stopped as the vehicle power source was turned off. Therefore, as in this steering control system, the control circuit can determine, at start-up, whether the control circuit has been reset based on whether the information indicating that control was stopped as the vehicle power source was turned off is stored.

The steering control system of the present invention can appropriately respond when control circuits that are operating normally are reset.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a configuration diagram of a steer-by-wire steering system in which one embodiment of a steering control system is installed;
FIG. 2 is a block diagram of a reaction force control device and a turning control device of the embodiment;
FIG. 3 is a time chart showing start-up sequences of the reaction force control device and a vehicle control device of the embodiment;
FIG. 4A is a configuration diagram showing a comparative example of state transition of the reaction force control device and the turning control device;
FIG. 4B is another configuration diagram showing a comparative example of state transition of the reaction force control device and the turning control device;
FIG. 4C is another configuration diagram showing a comparative example of state transition of the reaction force control device and the turning control device;
FIG. 5 is a flowchart showing a procedure of processing by the reaction force control device of the embodiment;
FIG. 6A is a configuration diagram showing an example of state transition of the reaction force control device and the turning control device of the embodiment;
FIG. 6B is another configuration diagram showing an example of state transition of the reaction force control device and the turning control device of the embodiment;
FIG. 7 is a configuration diagram showing another example of state transition of the reaction force control device and the turning control device of the embodiment; and
FIG. 8 is a configuration diagram showing another example of state transition of the reaction force control device and the turning control device of the embodiment.

### DETAILED DESCRIPTION OF EMBODIMENTS

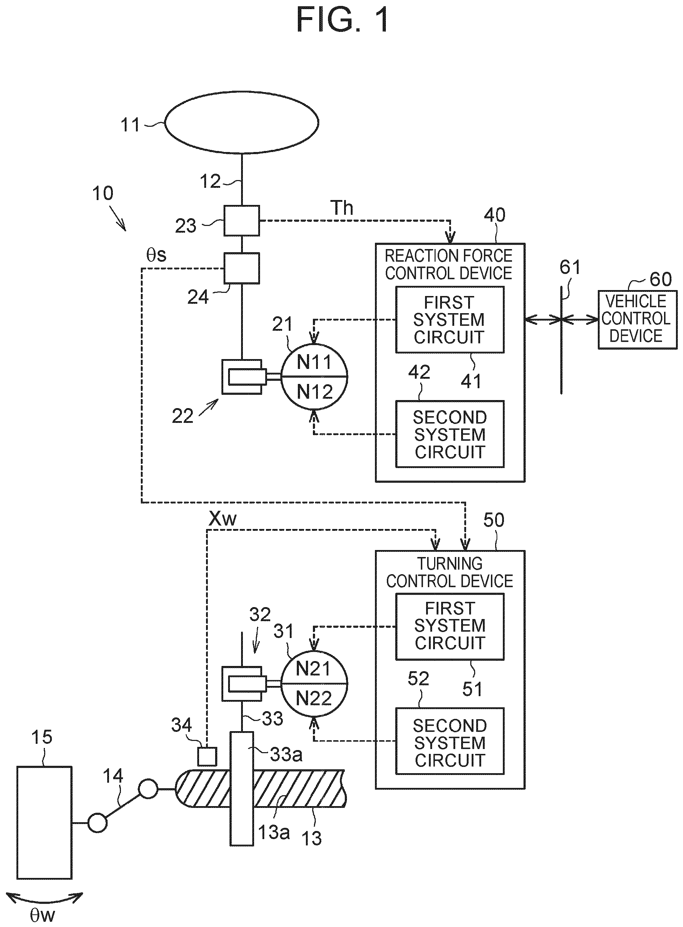

An embodiment in which a steering control system is embodied in a steer-by-wire steering system will be described below. As shown in FIG. 1, a steering system 10 of a vehicle has a steering shaft 12 that is coupled to a steering wheel 11. The steering system 10 has a turning shaft 13 that extends along a vehicle width direction (the left-right direction in FIG. 1). At both ends of the turning shaft 13, turning wheels 15 are respectively coupled through tie rods 14. As the turning shaft 13 performs linear motion, a turning angle θw of the turning wheels 15 is changed. The steering shaft 12 and the turning shaft 13 constitute a steering mechanism of the vehicle. In FIG. 1, only the turning wheel 15 on one side is shown.

The steering system 10 has a reaction force motor 21 and a speed reduction mechanism 22. The reaction force motor 21 is a generation source of a steering reaction force. The steering reaction force refers to a force that acts toward the opposite direction from a direction in which a driver operates the steering wheel 11. A rotating shaft of the reaction force motor 21 is coupled to the steering shaft 12 through the speed reduction mechanism 22. Torque of the reaction force motor 21 is applied to the steering shaft 12 as the steering reaction force. Applying the steering reaction force to the steering wheel 11 can give the driver an appropriate sense of resistance to steering.

The reaction force motor 21 is, for example, a three-phase brushless motor. The reaction force motor 21 has a winding set N11 of a first system and a winding set N12 of a second system. The winding set N11 of the first system and the winding set N12 of the second system are wound around a common stator (not shown). The winding set N11 of the first system and the winding set N12 of the second system are equivalent in electric characteristics.

The steering system 10 has a turning motor 31 and a speed reduction mechanism 32. The turning motor 31 is a generation source of a turning force. The turning force refers to motive power for turning the turning wheels 15. A rotating shaft of the turning motor 31 is coupled to a pinion shaft 33 through the speed reduction mechanism 32. Pinion teeth 33a of the pinion shaft 33 are meshed with rack teeth 13a of the turning shaft 13. Torque of the turning motor 31 is applied as the turning force to the turning shaft 13 through the pinion shaft 33. As the turning motor 31 rotates, the turning shaft 13 moves along the vehicle width direction.

The turning motor 31 is, for example, a three-phase brushless motor. The turning motor 31 has a winding set N21 of a first system and a winding set N22 of a second system. The winding set N21 of the first system and the winding set N22 of the second system are wound around a common stator (not shown). The winding set N21 of the first system and the winding set N22 of the second system are equivalent in electric characteristics.

The steering system 10 has a reaction force control device 40. The reaction force control device 40 controls driving of the reaction force motor 21 that is a control target. The reaction force control device 40 executes reaction force control for generating a steering reaction force according to a steering torque Th in the reaction force motor 21. The reaction force control device 40 calculates a target steering reaction force based on the steering torque Th detected through a torque sensor 23. The torque sensor 23 is provided on the steering shaft 12. The reaction force control device 40 controls power supply to the reaction force motor 21 such that the actual steering reaction force applied to the steering shaft 12 matches the target steering reaction force. The reaction force control device 40 controls power supply to the dual-system winding sets in the reaction force motor 21, for each system independently.

The reaction force control device 40 has a first system circuit 41 and a second system circuit 42. The first system circuit 41 controls power supply to the winding set N11 of the first system in the reaction force motor 21 according to the steering torque Th detected through the torque sensor 23. The second system circuit 42 controls power supply to the winding set N12 of the second system in the reaction force motor 21 according to the steering torque Th detected through the torque sensor 23.

The reaction force control device 40 and an on-board vehicle control device 60 are connected to each other through an on-board network 61. The on-board network 61 is, for example, a controller area network (CAN). The reaction force control device 40 and the on-board vehicle control device 60 exchange information with each other through the on-board network 61. The vehicle control device 60 controls travel of the vehicle. Specifically, the vehicle control device 60 controls, for example, a power train of the vehicle. The power train includes a travel driving source and a power transmission mechanism of the vehicle. The travel driving source includes, for example, an engine or a motor. The power transmission mechanism is a mechanism for transmitting motive power generated by the travel driving source to driving wheels. The reaction force control device 40 controls driving of the reaction force motor 21 based on information exchanged between the reaction force control device 40 and the vehicle control device 60.

The steering system 10 has a turning control device 50. The turning control device 50 controls driving of the turning motor 31 that is a control target. The turning control device 50 executes turning control that generates a turning force for turning the turning wheels 15 in the turning motor 31 according to the steering state. The turning control device 50 takes in a steering angle θs detected through a steering angle sensor 24 and a stroke Xw of the turning shaft 13 detected through a stroke sensor 34. The steering angle θs is a state variable showing an amount of rotating operation of the steering wheel 11. The stroke Xw is an amount of shift of the turning shaft 13 with respect to its neutral position, and is a state variable reflecting the turning angle θw. The steering angle sensor 24 is provided between the speed reduction mechanism 22 and the torque sensor 23 on the steering shaft 12. The stroke sensor 34 is provided near the turning shaft 13.

The turning control device 50 calculates a target turning angle of the turning wheels 15 based on the steering angle θs detected through the steering angle sensor 24. The target turning angle can be obtained, for example, by multiplying the detected steering angle θs by a steering angle ratio. The steering angle ratio is a ratio of the turning angle θw to the steering angle θs. The steering angle ratio is a value that is set in advance according to the product specifications etc. The turning control device 50 calculates the turning angle θw based on the stroke Xw of the turning shaft 13 detected through the stroke sensor 34. The turning control device 50 controls power supply to the turning motor 31 such that the turning angle θw calculated based on the stroke Xw matches the target turning angle. The turning control device 50 controls power supply to the dual-system winding sets in the turning motor 31, for each system independently.

The turning control device 50 has a first system circuit 51 and a second system circuit 52. The first system circuit 51 controls power supply to the winding set N21 of the first system in the turning motor 31 based on the steering angle θs detected through the steering angle sensor 24 and the stroke Xw of the turning shaft 13 detected through the stroke sensor 34. The second system circuit 52 controls power supply to the winding set N22 of the second system in the turning motor 31 based on the steering angle θs detected through the steering angle sensor 24 and the stroke Xw of the turning shaft 13 detected through the stroke sensor 34.

The reaction force control device 40 and the reaction force motor 21 may be integrally provided to constitute a so-called mechano-electric integrated reaction force actuator. The turning control device 50 and the turning motor 31 may be integrally provided to constitute a so-called mechano-electric integrated turning actuator. The reaction force control device 40 and the turning control device 50 constitute a steering control system.

### Reaction Force Control Device

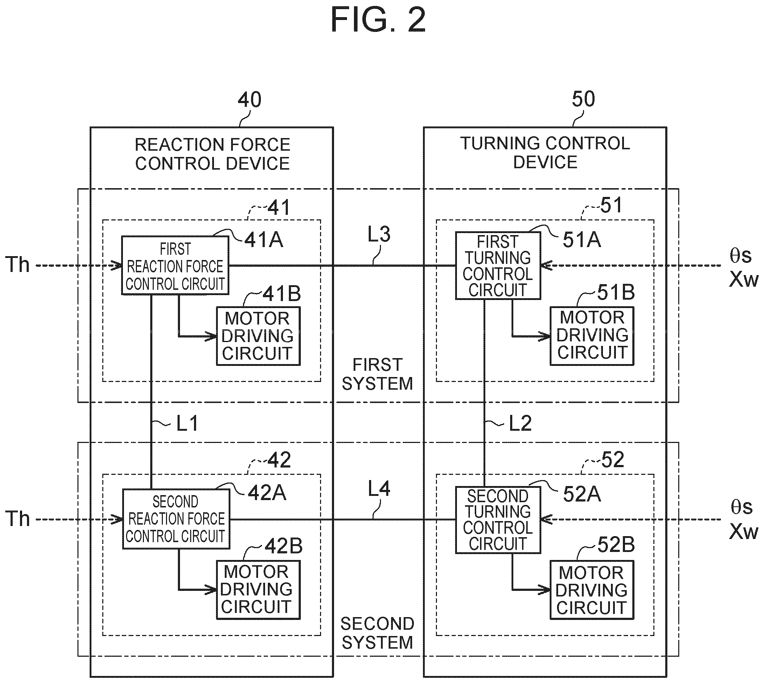

Next, the configuration of the reaction force control device will be described in detail. As shown in FIG. 2, the reaction force control device 40 has a first system circuit 41 and a second system circuit 42. The first system circuit 41 has a first reaction force control circuit 41A and a motor driving circuit 41B. The second system circuit 42 has a second reaction force control circuit 42A and a motor driving circuit 42B.

The first reaction force control circuit 41A is formed by a processing circuit including (1) one or more processors that operate in accordance with a computer program (software), (2) one or more dedicated hardware circuits, such as application-specific integrated circuits (ASICs), that execute at least some of various processes, or (3) a combination of (1) and (2). The processor includes a central processing unit (CPU). The processor includes memories, such as a random-access memory (RAM) and a read-only memory (ROM). The memories store program codes or commands configured to make the CPU execute processes. The term "memory," i.e., "non-transitory computer-readable medium" covers all available media that can be accessed by general-purpose or special-purpose computers.

The first reaction force control circuit 41A calculates a target steering reaction force that should be generated in the reaction force motor 21 based on the steering torque Th detected through the torque sensor 23, and calculates a first current command value for the winding set N11 of the first system according to the calculated value of the target steering reaction force. The first current command value is set to a value that is half (50%) of an amount of current (100%) required to generate the target steering reaction force in the reaction force motor 21. The first reaction force control circuit 41A generates a driving signal (PWM signal) for the motor driving circuit 41B by executing current feedback control that makes the actual value of the current supplied to the winding set N11 of the first system follow the first current command value.

The motor driving circuit 41B is a PWM inverter in which three legs respectively corresponding to three phases (U, V, W) are connected in parallel, with each leg as a basic unit formed by two series-connected switching elements, such as field-effect transistors (FETs). The motor driving circuit 41B converts direct-current power supplied from a battery into three-phase alternating-current power as the switching element in each phase switches based on the driving signal generated by the first reaction force control circuit 41A. The three-phase alternating-current power generated by the motor driving circuit 41B is supplied to the winding set N11 of the first system of the reaction force motor 21 through a power supply path of each phase formed by a busbar, a cable, or the like. Thus, the winding set N11 of the first system generates torque according to the first current command value.

The second reaction force control circuit 42A basically has the same configuration as the first reaction force control circuit 41A. The second reaction force control circuit 42A calculates a target steering reaction force that should be generated in the reaction force motor 21 based on the steering torque Th detected through the torque sensor 23, and calculates a second current command value for the winding set N12 of the second system according to the calculated value of the target steering reaction force. The second current command value is set to a value that is half (50%) of an amount of current required to generate the target steering reaction force in the reaction force motor 21. The second reaction force control circuit 42A generates a driving signal for the motor driving circuit 42B by executing current feedback control that makes the actual value of the current supplied to the winding set N12 of the second system follow the second current command value.

The motor driving circuit 42B basically has the same configuration as the motor driving circuit 41B. The motor driving circuit 42B converts direct-current power supplied from the battery into three-phase alternating-current power based on the driving signal generated by the second reaction force control circuit 42A. The three-phase alternating-current power generated by the motor driving circuit 42B is supplied to the winding set N12 of the second system of the reaction force motor 21 through a power supply path of each phase formed by a busbar, a cable, or the like. Thus, the winding set N12 of the second system generates torque according to the second current command value. The reaction force motor 21 generates torque that is a total of the torque generated by the winding set N11 of the first system and the torque generated by the winding set N12 of the second system.

Depending on the product specifications, there may be a master-slave relationship between the first system circuit 41 and the second system circuit 42 of the reaction force control device 40. In this case, for example, the first system circuit 41 may function as the master and the second system circuit 42 may function as the slave. Depending on the product specifications, the first system circuit 41 and the second system circuit 42 may be in an equal relationship.

### Turning Control Device

Next, the configuration of the turning control device 50 will be described in detail. As shown in FIG. 2, the turning control device 50 has a first system circuit 51 and a second system circuit 52. The first system circuit 51 has a first turning control circuit 51A and a motor driving circuit 51B. The second system circuit 52 has a second turning control circuit 52A and a motor driving circuit 52B.

The first turning control circuit 51A basically has the same configuration as the first reaction force control circuit 41A. The first turning control circuit 51A calculates a target turning angle of the turning wheels 15 based on the steering angle θs detected through the steering angle sensor 24. The turning control device 50 calculates the turning angle θw based on the stroke Xw of the turning shaft 13 detected through the stroke sensor 34. The first turning control circuit 51A calculates a target turning force that should be generated in the turning motor 31 through execution of angle feedback control that makes the turning angle θw calculated based on the stroke Xw follow the target turning angle, and calculates a third current command value for the winding set N21 of the first system of the turning motor 31 according to the calculated value of the target turning force. The third current command value is set to a value that is half (50%) of an amount of current required to generate the target turning force in the turning motor 31. The first turning control circuit 51A generates a driving signal for the motor driving circuit 51B by executing current feedback control that makes the actual value of the current supplied to the winding set N21 of the first system follow the third current command value.

The motor driving circuit 51B basically has the same configuration as the motor driving circuit 41B. The motor driving circuit 51B converts direct-current power supplied from the battery into three-phase alternating-current power based on the driving signal generated by the first turning control circuit 51A. The three-phase alternating-current power generated by the motor driving circuit 51B is supplied to the winding set N21 of the first system of the turning motor 31 through a power supply path of each phase formed by a busbar, a cable, or the like. Thus, the winding set N21 of the first system generates torque according to the third current command value.

The second turning control circuit 52A basically has the same configuration as the first reaction force control circuit 41A. The second turning control circuit 52A calculates a target turning angle of the turning wheels 15 based on the steering angle θs detected through the steering angle sensor 24. The turning control device 50 calculates the turning angle θw based on the stroke Xw of the turning shaft 13 detected through the stroke sensor 34. The second turning control circuit 52A calculates a target turning force that should be generated in the turning motor 31 through execution of angle feedback control that makes the turning angle θw calculated based on the stroke Xw follow the target turning angle, and calculates a fourth current command value for the winding set N22 of the second system of the turning motor 31 according to the calculated value of the target turning force. The fourth current command value is set to a value that is half (50%) of an amount of current required to generate the target turning force in the turning motor 31. The second turning control circuit 52A generates a driving signal for the motor driving circuit 52B by executing current feedback control that makes the actual value of the current supplied to the winding set N22 of the second system follow the fourth current command value.

The motor driving circuit 52B basically has the same configuration as the motor driving circuit 41B. The motor driving circuit 52B converts direct-current power supplied from the battery into three-phase alternating-current power based on the driving signal generated by the second turning control circuit 52A. The three-phase alternating-current power generated by the motor driving circuit 52B is supplied to the winding set N22 of the second system of the turning motor 31 through a power supply path of each phase formed by a busbar, a cable, or the like. Thus, the winding set N22 of the second system generates torque according to the fourth current command value. The turning motor 31 generates torque that is a total of the torque that the winding set N21 of the first system generates and the torque that the winding set N22 of the second system generates.

Depending on the product specifications, there may be a master-slave relationship between the first system circuit 51 and the second system circuit 52 of the turning control device 50. In this case, for example, the first system circuit 51 may function as the master and the second system circuit 52 may function as the slave. Depending on the product specifications, the first system circuit 51 and the second system circuit 52 may be in an equal relationship.

### Communication Paths

Next, communication paths inside the reaction force control device 40 and the turning control device 50 and communication paths between the reaction force control device 40 and the turning control device 50 will be described.

As shown in FIG. 2, the first reaction force control circuit 41A and the second reaction force control circuit 42A exchange pieces of information with each other through a communication line L1. These pieces of information include information on an abnormality of the first reaction force control circuit 41A, the second reaction force control circuit 42A, or the motor driving circuits 41B, 42B. These pieces of information further include values of flags indicating various states. The first reaction force control circuit 41A and the second reaction force control circuit 42A control driving of the reaction force motor 21 in cooperation with each other based on the pieces of information exchanged therebetween.

The first turning control circuit 51A and the second turning control circuit 52A exchange pieces of information with each other through a communication line L2. These pieces of information include information on an abnormality of the first turning control circuit 51A, the second turning control circuit 52A, or the motor driving circuits 51B, 52B. These pieces of information further include values of flags indicating various states. The first turning control circuit 51A and the second turning control circuit 52A control driving of the turning motor 31 in cooperation with each other based on the pieces of information exchanged therebetween.

The first reaction force control circuit 41A and the first turning control circuit 51A exchange pieces of information with each other through a communication line L3. These pieces of information include information on an abnormality of the first reaction force control circuit 41A, the first turning control circuit 51A, or the motor driving circuits 41B, 51B. These pieces of information further include values of flags indicating various states. The first reaction force control circuit 41A and the first turning control circuit 51A operate in coordination with each other based on the pieces of information exchanged therebetween.

The second reaction force control circuit 42A and the second turning control circuit 52A exchange pieces of information with each other through a communication line L4. These pieces of information include information on an abnormality of the second reaction force control circuit 42A, the second turning control circuit 52A, or the motor driving circuits 42B, 52B. These pieces of information further include values of flags indicating various states. The second reaction force control circuit 42A and the second turning control circuit 52A operate in coordination with each other based on the pieces of information exchanged therebetween.

### Driving Modes of Motors

Next, driving modes of the reaction force motor 21 and the turning motor 31 will be described. The driving modes include a cooperative driving mode, an independent driving mode, and a single-system driving mode.

The cooperative driving mode is a driving mode for normal times when the first system circuits 41, 51 and the second system circuits 42, 52 are operating normally. The first system circuit 41 and the second system circuit 42 generate equal torque in both the winding set N11 of the first system and the winding set N12 of the second system of the reaction force motor 21 by sharing pieces of information, such as a command value and a limit value. The first system circuit 51 and the second system circuit 52 generate equal torque in both the winding set N21 of the first system and the winding set N22 of the second system of the turning motor 31 by sharing pieces of information, such as a command value and a limit value.

In the case where there is a master-slave relationship between the first system circuit 41 and the second system circuit 42 of the reaction force control device 40, when the cooperative driving mode is selected as the driving mode, the slave controls driving of the reaction force motor 21 using a command value calculated by the master. In the case where there is a master-slave relationship between the first system circuit 51 and the second system circuit 52 of the turning control device 50, when the cooperative driving mode is selected as the driving mode, the slave controls driving of the turning motor 31 using a command value calculated by the master.

The independent driving mode is a driving mode for a case where the operation of one of the four control circuits 41A, 42A, 51A, 52A has stopped momentarily but an abnormality has not been confirmed and there is a possibility of returning to normal operation. In the independent driving mode, for example, when there is a possibility that one control circuit that has stopped operating may return to normal operation, the other three control circuits each generate torque in the corresponding winding set based on its own calculation result without using information obtained by inter-system communication.

In the case where there is a master-slave relationship between the first system circuit 41 and the second system circuit 42 of the reaction force control device 40, when the independent driving mode is selected as the driving mode, the master-slave relationship between the first system circuit 41 and the second system circuit 42 is temporarily dissolved. In the case where there is a master-slave relationship between the first system circuit 51 and the second system circuit 52 of the turning control device 50, when the independent driving mode is selected as the driving mode, the master-slave relationship between the first system circuit 51 and the second system circuit 52 is temporarily dissolved.

The single-system driving mode is a driving mode for a case where an abnormality of one of the four control circuits 41A, 42A, 51A, 52A has been confirmed and there is no possibility of returning to normal operation. For example, when an abnormality of the first system circuits 41, 51 is confirmed, torque is generated in the reaction force motor 21 and the turning motor 31 by the second system circuits 42, 52 alone. When an abnormality of the second system circuits 42, 52 is confirmed, torque is generated in the reaction force motor 21 and the turning motor 31 by the first system circuits 41, 51 alone.

In the case where there is a master-slave relationship between the first system circuit 41 and the second system circuit 42 of the reaction force control device 40, when the single-system driving mode is selected as the driving mode, the master-slave relationship between the first system circuit 41 and the second system circuit 42 is temporarily dissolved. In the case where there is a master-slave relationship between the first system circuit 51 and the second system circuit 52 of the turning control device 50, when the single-system driving mode is selected as the driving mode, the master-slave relationship between the first system circuit 51 and the second system circuit 52 is temporarily dissolved.

At normal times when no abnormality is present, the control circuits 41A, 42A, 51A, 52A control driving of the motors 21, 31 in the cooperative driving mode. When an abnormality determination condition is met in a state where the cooperative driving mode is selected as the driving mode, the control circuits switch the driving mode from the cooperative driving mode to the independent driving mode. When a returning determination condition is met before an abnormality is confirmed in a state where the independent driving mode is selected as the driving mode, the control circuits return the driving mode from the independent driving mode to the cooperative driving mode. When an abnormality confirmation condition is met in the state where the independent driving mode is selected as the driving mode, the control circuits switch the driving mode from the independent driving mode to the single-system driving mode.

Examples of abnormalities include temporary ones that can be recovered, such as an abnormality in communication between the systems, an abnormality in communication inside the same system, a discrepancy in command value between the systems, and a decrease in current limit value.

### Start-up Sequences

Next, start-up sequences of the reaction force control device 40 and the vehicle control device 60 will be described. The start-up sequences are series of processes that are executed with turning on of the vehicle power source as a trigger. During a period in which the vehicle power source is off, the reaction force control device 40 and the vehicle control device 60 are kept in a non-operating state. That the vehicle power source turns on or off means that a start switch provided at the driver's seat, for example, turns on or off. The start switch is operated when starting or stopping the travel driving source of the vehicle, and is, for example, an ignition switch or a power switch.

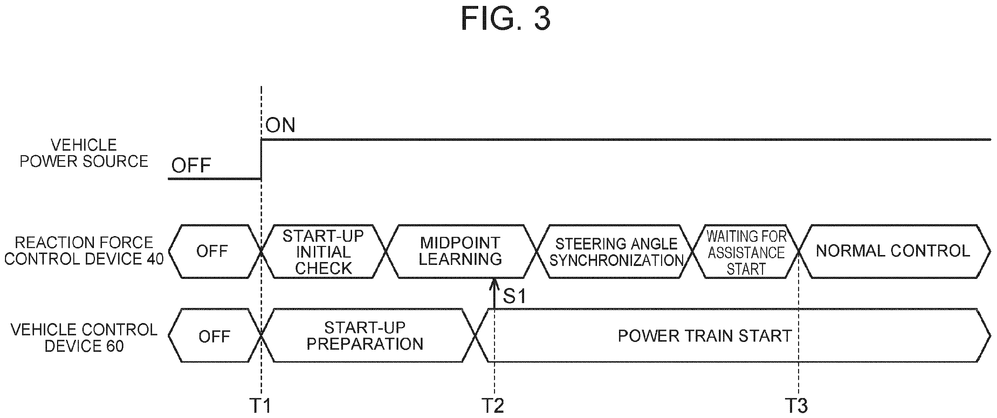

First, the start-up sequence of the vehicle control device 60 will be described. As shown in the time chart of FIG. 3, when the vehicle power source is turned on (time T1), the vehicle control device 60 starts executing specified start-up preparations. The start-up preparations include initial check of the vehicle control device 60 and a process required to start the power train of the vehicle. After completing the start-up preparations, the vehicle control device 60 starts the power train (mainly the travel driving source). Upon completing the execution of a power train starting process, the vehicle control device 60 turns a preparation completion signal S1 on (time T2). The vehicle control device 60 turns the preparation completion signal S1 on regardless of the state of the reaction force control device 40.

The preparation completion signal S1 is information indicating whether preparations for travel of the vehicle have been completed, including completion of execution of the power train starting process, and whether the vehicle has reached a state of being able to travel. That the preparation completion signal S1 is on indicates that the vehicle has reached the state of being able to travel. That the preparation completion signal S1 is off indicates that the vehicle has not reached the state of being able to travel. The preparation completion signal S1 is transmitted to the reaction force control device 40 as an electric signal.

Next, the start-up sequence of the reaction force control device 40 will be described. As shown in the time chart of FIG. 3, when the vehicle power source is turned on (time T1), the reaction force control device 40 starts, and sequentially executes an initial check (a start-up initial check), a midpoint learning process, and a steering angle synchronization process, eventually transitioning to an assistance start waiting state. The initial check, the midpoint learning process, and the steering angle synchronization process are a series of preparation processes required to start the execution of reaction force control that generates a steering reaction force in the reaction force motor 21.

The initial check is an initial inspection that is executed with turning on of the vehicle power source as a trigger, and includes, for example, a check on hardware, initialization of the CPU (central processing unit), and initialization of variables, flags, etc.

The midpoint learning process is a process for learning a steering neutral position of the steering wheel 11. The steering system 10 has a stopper mechanism that restricts rotation of the steering wheel 11 to set a limit on the steering angle of the steering wheel 11. For example, the stopper mechanism restricts the steering range of the steering wheel 11 to less than 360°. The reaction force control device 40 causes the steering wheel 11 to operate to a first operation end and then operate reversely to a second operation end through control of the reaction force motor 21. Thereafter, the reaction force control device 40 calculates the midpoint of the steering angle based on the rotation angles of the reaction force motor 21 at the start point and the end point of the reverse operation of the steering wheel 11. The midpoint of the steering angle corresponds to a motor midpoint that is the rotational position of the reaction force motor 21 when the steering wheel 11 is located at the steering neutral position. The reaction force control device 40 stores the midpoint of the steering angle or the motor midpoint in the memory as the steering neutral position of the steering wheel 11.

The reaction force control device 40 learns the steering neutral position of the steering wheel 11 in the case where information about the steering neutral position stored in the memory has disappeared. For example, this applies to a case where the vehicle power source is turned on for the first time after a new battery is mounted on the vehicle. This is because when the battery is removed from the vehicle as a result of battery replacement work, information about the steering neutral position stored in the memory of the reaction force control device 40 disappears due to the reaction force control device 40 being no longer supplied with electricity.

Depending on the product specifications etc., the reaction force control device 40 may execute the midpoint learning process each time the vehicle power source is turned on, or may execute the midpoint learning process when the reliability of information about the steering neutral position stored in the memory has decreased.

The steering angle synchronization process is a process for correcting the rotational position of the steering wheel 11. When the rotational position of the steering wheel 11 is a position different from the rotational position corresponding to the turning position of the turning wheels 15, the reaction force control device 40 drives the reaction force motor 21 such that the rotational position of the steering wheel 11 becomes the rotational position corresponding to the turning position of the turning wheels 15.

For example, when the vehicle power source is turned off, the reaction force control device 40 stores the steering angle θs that has been detected immediately before that as a criterial steering angle. The criterial steering angle is a criterion for determining whether the steering wheel 11 has been rotated during the period when the vehicle power source has been off. When the steering angle θs immediately after the vehicle power source is turned on does not match the criterial steering angle, the reaction force control device 40 obtains the difference between the steering angle θs immediately after the vehicle power source is turned on and the criterial steering angle, and controls power supply to the reaction force motor 21 so as to eliminate this difference.

The reaction force control device 40 may obtain a difference between the steering angle θs immediately after the vehicle power source is turned on and a value obtained by multiplying the turning angle θw immediately after the vehicle power source is turned on by the reciprocal number of the steering angle ratio, and control power supply to the reaction force motor 21 so as to eliminate this difference.

The assistance start waiting state is a state of, after execution of the preparation process is completed, waiting for completion of execution of the power train starting process by the vehicle control device 60 to be confirmed. The reaction force control device 40 determines whether the reaction force control device 40 can transition from the assistance start waiting state to a normal control state according to the state of starting of the power train of the vehicle. When the preparation completion signal S1 has not been turned on by the vehicle control device 60, the reaction force control device 40 determines that execution of the vehicle power train starting process has not been completed and maintains the assistance start waiting state. When the preparation completion signal S1 has been turned on by the vehicle control device 60, the reaction force control device 40 determines that execution of the vehicle power train starting process has been completed (time T3), and transitions from the assistance start waiting state to the normal control state. The normal control state is a state of executing the reaction force control that generates a steering reaction force in the reaction force motor 21. When in the normal control state, the reaction force control device 40 controls driving of the reaction force motor 21 according to the steering state of the steering wheel 11.

In the time chart of FIG. 3, as one example, the vehicle control device 60 turns the preparation completion signal S1 on during execution of the midpoint learning process.

### Supplementary Description of Control Circuits

Next, a supplementary description of the configuration of each of the control circuits 41A, 42A, 51A, 52A will be given.

An operation guarantee range is set for the power source voltage of each control circuit. The operation guarantee range is a range of voltage within which operation according to the specifications is guaranteed. Each control circuit starts operating when, as a trigger, the power source voltage has reached a value within the operation guarantee range from a value outside the operation guarantee range, and executes the start-up sequence shown in the time chart of FIG. 3 described above.

Each control circuit has a reset function. Each control circuit is reset when a specified reset factor occurs. Reset is a process for initializing the internal state of each control circuit. Examples of reset factors include a decrease in the power source voltage of the control circuit. Each control circuit is reset when the power source voltage decreases temporarily and the value of the power source voltage falls outside the operation guarantee range. When the reset is completed, each control circuit executes the start-up sequence shown in the time chart of FIG. 3 described above again.

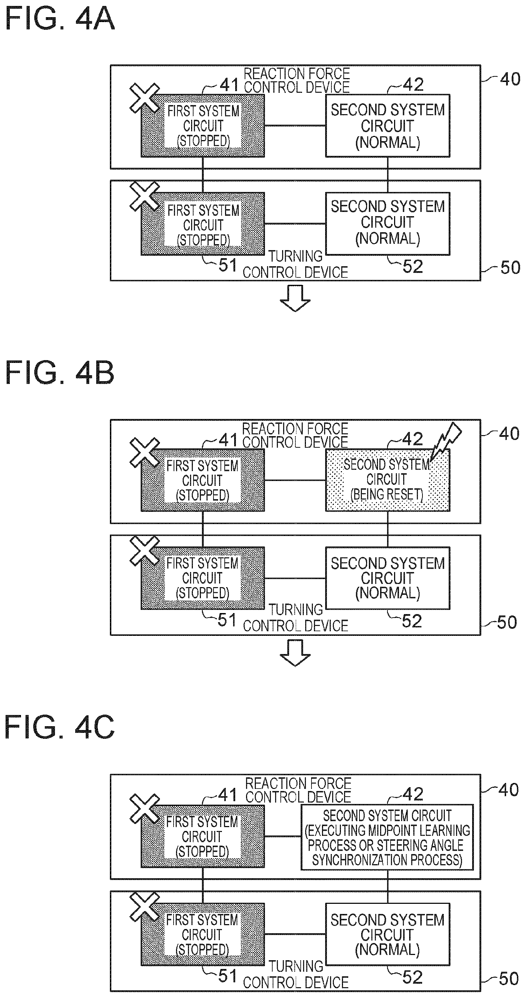

However, there is a concern as follows due to reset of control circuits. As shown in FIG. 4A, for example, when an abnormality of the first system circuits 41, 51 is confirmed, the second system circuits 42, 52 operate in the single-system driving mode. Thus, control of the reaction force motor 21 and the turning motor 31 is continued by the second system circuits 42, 52 alone. The first system circuits 41, 51 are kept in a non-operating state.

As shown in FIG. 4B, it is conceivable that the second reaction force control circuit 42A, for example, may be reset in the state where control of the reaction force motor 21 and the turning motor 31 is continued by the second system circuits 42, 52 alone.

As shown in FIG. 4C, after the reset is completed, the second reaction force control circuit 42A executes the start-up sequence shown in the time chart of FIG. 3 described above. The start-up sequence includes the midpoint learning process and the steering angle synchronization process. During execution of these processes, the steering wheel 11 may rotate automatically for the purpose of learning the steering neutral position of the steering wheel 11 or correcting the rotational position of the steering wheel 11.

Meanwhile, the second turning control circuit 52A continues control of the turning motor 31 as at normal times. That is, the second turning control circuit 52A controls the turning angle θw of the turning wheels 15 based on the steering angle θs detected through the steering angle sensor 24. Therefore, the turning wheels 15 may turn automatically as the steering wheel 11 rotates automatically.

This phenomenon occurs also in the case where an abnormality of the second system circuits 42, 52 is confirmed and the first system circuits 41, 51 are operating in the single-system driving mode. In the case where the first system circuits 41, 51 are operating in the single-system driving mode, when the first reaction force control circuit 41A is reset, the turning wheels 15 may turn automatically as the steering wheel 11 rotates automatically.

Thus, there is a concern that the driver of the vehicle may feel a sense of discomfort about so-called self-steering. Self-steering refers to the steering wheel 11 rotating automatically or the turning wheels 15 turning automatically without the driver's intention.

As a countermeasure, each of the control circuits 41A, 42A, 51A, 52A executes a process for responding to reset of a control circuit at start-up.

### Procedure of Processing by Control Circuits

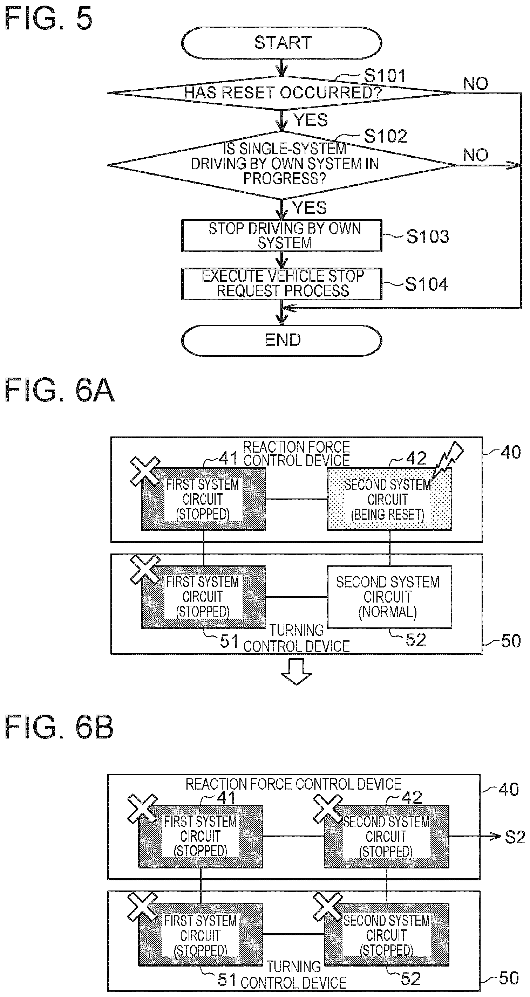

Next, a procedure of processing that each of the control circuits 41A, 42A, 51A, 52A executes at start-up will be described in accordance with the flowchart of FIG. 5. The processes in the flowchart are executed during a period from start-up after the vehicle power source is turned on until the initial check ends in the time chart of FIG. 3. The processes in the flowchart are executed on a specified control cycle. The term "start-up" covers not only start-up upon turning on of the vehicle power source but also restart after completion of reset of the control circuit. Here, a description will be given with the first reaction force control circuit 41A taken as an example.

As shown in the flowchart of FIG. 5, immediately after starting, the first reaction force control circuit 41A determines whether reset has occurred (step S101). When the vehicle power source is turned on, the first reaction force control circuit 41A stores information that it has started control in the memory. When the vehicle power source is turned off, the first reaction force control circuit 41A stores information that it has stopped control in the memory. When the first reaction force control circuit 41A starts control or stops control, for example, according to the state of the vehicle power source, the first reaction force control circuit 41A sets a flag to a certain value. Specifically, when the first reaction force control circuit 41A has started control as the vehicle power source has been turned on, the first reaction force control circuit 41A sets the value of the flag to "1." When the first reaction force control circuit 41A has stopped control as the vehicle power source has been turned off, the first reaction force control circuit 41A sets the value of the flag to "0."

At the next start-up, the first reaction force control circuit 41A determines that reset has not occurred when information that it has stopped control as the vehicle power source has been turned off is stored in the memory, i.e., when the value of the flag is "0." At the next start-up, the first reaction force control circuit 41A determines that reset has occurred when information that it has stopped control as the vehicle power source has been turned off is not stored in the memory, i.e., when the value of the flag is "1." This is because, when reset before the vehicle power source is turned off, the first reaction force control circuit 41A cannot store information indicating that it has stopped control in the memory and the value "1" of the flag is maintained as is.

When it is determined that reset has occurred (YES in step S101), the first reaction force control circuit 41A determines whether the driving mode of the reaction force motor 21 is the single-system driving mode by its own system (here, the first system) (step S102).

The first reaction force control circuit 41A determines the driving mode of its own system based on the state of the control circuit of the other system, here, the state of the second reaction force control circuit 42A that is the second system. The first reaction force control circuit 41A recognizes the state of the second reaction force control circuit 42A through communication with the second reaction force control circuit 42A. When the second reaction force control circuit 42A is operating normally, the first reaction force control circuit 41A determines that the driving mode is not the single-system driving mode by its own system. When the second reaction force control circuit 42A is not operating, the first reaction force control circuit 41A determines that the driving mode is the single-system driving mode by its own system.

In the case where the first reaction force control circuit 41A cannot communicate with the second reaction force control circuit 42A, the first reaction force control circuit 41A may recognize the state of the second reaction force control circuit 42A based on a result of monitoring an intermediate voltage of the second reaction force control circuit 42A. The intermediate voltage is a voltage between a power source relay and a reverse connection relay of the second reaction force control circuit 42A. The power source relay and the reverse connection relay are provided on a power supply path to the second reaction force control circuit 42A. The first reaction force control circuit 41A determines that the second reaction force control circuit 42A is not operating, for example, when the intermediate voltage of the second reaction force control circuit 42A is lower than a specified voltage threshold value.

When it is determined that the driving mode is the single-system driving mode by its own system (YES in step S102), the first reaction force control circuit 41A executes a process for stopping driving of the reaction force motor 21 and the turning motor 31 by its own system (step S103).

The first reaction force control circuit 41A executes stop control that stops its own operation. Stopping the operation of the first reaction force control circuit 41A means stopping power supply to the winding set N11 of the first system of the reaction force motor 21. When a specified period has elapsed since execution of the stop control has started, the first reaction force control circuit 41A turns its power source relay off to shut off power supply to itself. As a result, the first reaction force control circuit 41A stops operating.

The first turning control circuit 51A that belongs to the same system as the first reaction force control circuit 41A recognizes the state of the first reaction force control circuit 41A through communication with the first reaction force control circuit 41A. When it is recognized that execution of the stop control by the first reaction force control circuit 41A has started, the first turning control circuit 51A starts executing its own stop control in synchronization with the first reaction force control circuit 41A. Stopping the operation of the first turning control circuit 51A means stopping power supply to the winding set N21 of the first system of the turning motor 31. When a specified period has elapsed since execution of the stop control has started, the first turning control circuit 51A turns its power source relay off to shut off power supply to itself. As a result, the first turning control circuit 51A stops operating.

Depending on the product specifications, the first reaction force control circuit 41A may transmit, to the first turning control circuit 51A, a command signal that requests starting execution of the stop control. In this case, the first turning control circuit 51A starts executing the stop control upon receiving the command signal. Further, depending on the product specifications, the first reaction force control circuit 41A may, through execution of the stop control, simply stop control of the reaction force motor 21 instead of shutting off power supply to itself. In this case, the first turning control circuit 51A stops control of the turning motor 31 based on the state of the first reaction force control circuit 41A.

Next, the first reaction force control circuit 41A executes a specified vehicle stop request process (step S104). The first reaction force control circuit 41A generates a vehicle stop request signal S2 for the vehicle control device 60, and transmits the generated vehicle stop request signal S2 to the vehicle control device 60 through the on-board network 61. The vehicle stop request signal S2 is an electric signal that requests the vehicle control device 60 to execute a process for safely stopping the vehicle.

When it is not determined in step S101 described above that reset has occurred (NO in step S101), or when it is not determined in step S102 described above that the driving mode is the single-system driving mode by its own system (NO in step S102), the first reaction force control circuit 41A ends the processing.

This completes the processing at start-up of the first reaction force control circuit 41A. The second reaction force control circuit 42A, the first turning control circuit 51A, and the second turning control circuit 52A execute the processes in the flowchart of FIG. 5 at start-up in the same manner as the first reaction force control circuit 41A.

### Workings of Embodiment

Next, the workings of the embodiment will be described. As shown in FIG. 6A, for example, when an abnormality of the first system circuits 41, 51 is confirmed, control of the reaction force motor 21 and the turning motor 31 is continued by the second system circuits 42, 52 alone. The first system circuits 41, 51 are kept in a non-operating state. In this state, it is conceivable that only the second reaction force control circuit 42A, for example, may be reset.

As shown in FIG. 6B, the second reaction force control circuit 42A restarts after completion of the reset. However, the second reaction force control circuit 42A starts executing the stop control immediately after restarting. The second reaction force control circuit 42A stops operating at the latest before execution of the midpoint learning in the start-up sequence is started, i.e., before the steering wheel 11 starts to rotate automatically.

The second turning control circuit 52A belonging to the same system as the second reaction force control circuit 42A operates in coordination with the second reaction force control circuit 42A. The second turning control circuit 52A starts executing the stop control in synchronization with the second reaction force control circuit 42A. The second turning control circuit 52A stops operating at the latest before execution of the midpoint learning in the start-up sequence is started.

Thus, in the case where the driving mode is the single-system mode by the second system, the midpoint learning process and the steering angle synchronization process in the start-up sequence are not executed when the second reaction force control circuit 42A is reset. As a result, automatic rotation of the steering wheel 11 is avoided. Further, the turning angle θw of the turning wheels 15 is prevented from changing without being intended due to the influence of automatic rotation of the steering wheel 11.

However, since all of the first system circuits 41, 51 and the second system circuits 42, 52 stop, it becomes difficult to execute appropriate reaction force control and appropriate turning control. Therefore, the second reaction force control circuit 42A transmits the vehicle stop request signal S2 to the vehicle control device 60 upon restarting after completion of the reset, before stopping operating. Upon receiving the vehicle stop request signal S2, the vehicle control device 60 executes the specified vehicle stop process to safely stop the vehicle. The vehicle stop process includes, for example, an automatic evacuation process that makes the vehicle pull over to a safe place, such as a road shoulder, and stop automatically, regardless of the driving state of the driver. Through execution of the vehicle stop process, the vehicle stops safely.

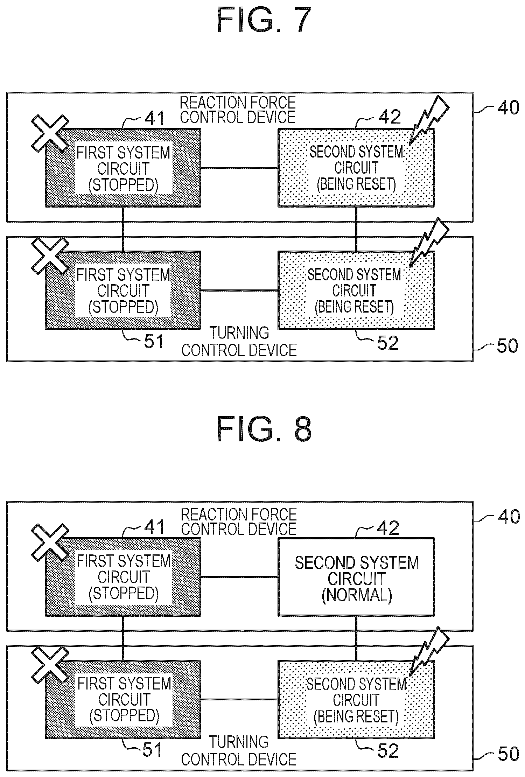

The following situation is also conceivable. As shown in FIG. 7, in the case where control of the reaction force motor 21 and the turning motor 31 is continued by the second system circuits 42, 52 alone, it is conceivable that both of the second reaction force control circuit 42A and the second turning control circuit 52A may be reset.

Also in this case, at least one of the second reaction force control circuit 42A and the second turning control circuit 52A executes the processing at start-up shown in the flowchart of FIG. 5 described above upon restarting after completion of the reset. As a result, the second system circuits 42, 52 stop operating. Further, at least one of the second reaction force control circuit 42A and the second turning control circuit 52A transmits the vehicle stop request signal S2 to the vehicle control device 60, so that the vehicle can be safely stopped.

In the case where both of the second reaction force control circuit 42A and the second turning control circuit 52A are reset, this does not lead to so-called self-steering. Therefore, it can be said that the reset system need not necessarily be stopped. However, the control circuits cannot return to normal control unless both of the second reaction force control circuit 42A and the second turning control circuit 52A complete the start-up sequence. Thus, a situation where the reaction force control and the turning control are not executed may continue for a long period of time. For this reason, it is desirable to stop the operation of the system in which reset has occurred.

The following situation is also conceivable. As shown in FIG. 8, a situation is conceivable where only the second turning control circuit 52A is reset in the case where control of the reaction force motor 21 and the turning motor 31 is continued by the second system circuits 42, 52 alone.

Also in this case, the second turning control circuit 52A executes the processing at start-up shown in the flowchart of FIG. 5 described above upon restarting after completion of the reset. Thus, the operation of the second system circuits 42, 52 can be stopped. Further, the second turning control circuit 52A transmits the vehicle stop request signal S2 to the vehicle control device 60, so that the vehicle can be safely stopped.

In the case where only the second turning control circuit 52A is reset, this does not lead to so-called self-steering. Therefore, it can be said that the reset system need not necessarily be stopped. However, depending on the contents of the abnormality of the first system circuits 41, 51, a situation where the reaction force control and the turning control are not executed may continue due to the second turning control circuit 52A being unable to end the start-up sequence normally. For this reason, it is desirable to stop the system in which reset has occurred.

### Advantages of Embodiment

The embodiment offers the following advantages. (1) For example, in the case where the driving mode of the reaction force motor 21 and the turning motor 31 is the single-system driving mode by the second system, when at least one of the second reaction force control circuit 42A and the second turning control circuit 52A is reset, the following process is executed. At least one of the second reaction force control circuit 42A and the second turning control circuit 52A that have been reset executes the process for stopping travel of the vehicle upon restarting after completion of the reset.

Thus, in the case where the control circuits are operating in the single-system driving mode, the vehicle can be prevented from continuing to travel in a state where appropriate control of the reaction force motor 21 or the turning motor 31 is hindered. That is, the vehicle can be prevented from continuing to travel in a state where the steering wheel 11 and the turning wheels 15 operate without being intended due to execution of the start-up sequence accompanying restart. Therefore, in the case where the control circuits are operating in the single-system driving mode by the second system, it is possible to appropriately respond to reset of at least one of the second reaction force control circuit 42A and the second turning control circuits 52A that are operating normally.

In the case where the driving mode of the reaction force motor 21 and the turning motor 31 is the single-system driving mode by the first system, the same process as in the case of the single-system driving mode by the second system is executed also when at least one of the first reaction force control circuit 41A and the first turning control circuit 51A is reset. That is, at least one of the first reaction force control circuit 41A and the first turning control circuit 51A that has been reset executes the process for stopping travel of the vehicle upon restarting after completion of the reset. Thus, the same advantages as in the case of the single-system driving mode by the second system can be achieved.

(2) In the case where the driving mode of the reaction force motor 21 and the turning motor 31 is the single-system driving mode by the second system, for example, when the second reaction force control circuit 42A is reset, the following process is executed. The reset second reaction force control circuit 42A stops driving of the reaction force motor 21 that is the control target thereof upon restarting after completion of the reset. The second turning control circuit 52A that is operating normally without being reset stops driving of the turning motor 31 that is the control target thereof in synchronization with the first reaction force control circuit 41A.

Thus, unintended behavior of the steering wheel 11 and the turning wheels 15 attributable to execution of the start-up sequence accompanying restart can be prevented. Further, the vehicle can be prevented from continuing to travel in a state where the steering wheel 11 and the turning wheels 15 operate without being intended due to execution of the start-up sequence accompanying restart. Therefore, in the case where the control circuits are operating in the single-system driving mode by the second system, it is possible to appropriately respond to reset of the second reaction force control circuit 42A that is operating normally.

The same process as when the second reaction force control circuit 42A is reset is executed also in the following three cases A1 to A3. Thus, the same advantages as when the second reaction force control circuit 42A is reset can be achieved.

A1. In the case where the driving mode of the reaction force motor 21 and the turning motor 31 is the single-system driving mode by the second system, the second turning control circuit 52A is reset.

A2. In the case where the driving mode of the reaction force motor 21 and the turning motor 31 is the single-system driving mode by the second system, both of the second reaction force control circuit 42A and the second turning control circuit 52A are reset.

A3. In the case where the driving mode of the reaction force motor 21 and the turning motor 31 is the single-system driving mode by the first system, at least one of the first reaction force control circuit 41A and the first turning control circuit 51A is reset.

(3) At start-up, each of the control circuits 41A, 42A, 51A, 52A determines that the control circuit has not been reset when information indicating that the control circuit has stopped control as the vehicle power source has been turned off is stored. At start-up, each of the control circuits determines that the control circuit has been reset when information indicating that the control circuit has stopped control as the vehicle power source has been turned off is not stored.

When reset before the vehicle power source is turned off, each control circuit cannot store, in the memory, information indicating that the control circuit has stopped control as the vehicle power source has been turned off. Therefore, each control circuit can determine whether the control circuit has been reset based on whether information indicating that the control circuit has stopped control as the vehicle power source has been turned off is stored. For example, information indicating that the control circuit has stopped control as the vehicle power source has been turned off is a flag.

### Other Embodiments

The embodiment may be implemented with the following changes made thereto.
- The reaction force control device 40 may execute a start permission determination process with turning on of the vehicle power source as a trigger. The start permission determination process is a process of determining whether to permit the vehicle control device 60 to start the power train. When the start-up sequence that is a process for preparing for the reaction force control is completed, the reaction force control device 40 transitions to the assistance start waiting state and turns a start permission signal on. When the start-up sequence has not been completed, the reaction force control device 40 turns the start permission signal off. The start permission signal is information indicating whether to permit the vehicle control device 60 to start the power train. That the start permission signal is on indicates that the vehicle control device 60 is permitted to start the power train. That the start permission signal is off indicates that the vehicle control device 60 is not permitted to start the power train. The start permission signal is transmitted to the vehicle control device 60 as an electric signal.

When the vehicle power source is turned on, the vehicle control device 60 starts executing specified start-up preparations. After completing the start-up preparations, the vehicle control device 60 transitions to a start permission waiting state. The start permission waiting state is a state of waiting for the reaction force control device 40 to permit starting the power train, i.e., for the start permission signal to be turned on. When it is recognized that the start permission signal is turned on in the start permission waiting state, the vehicle control device 60 starts the power train of the vehicle. When execution of the power train starting process is completed, the vehicle control device 60 turns the preparation completion signal S1 on. When it is recognized that the preparation completion signal S1 is on in the assistance start waiting state, the reaction force control device 40 transitions to the normal control state. The reaction force control device 40 controls driving of the reaction force motor 21 according to the steering state of the steering wheel 11.

Thus, also in the case where the vehicle control device 60 has completed its start-up preparations, when the reaction force control device 40 has not completed the process of preparing for the reaction force control, the vehicle control device 60 waits for this preparation process to be completed before starting the power train of the vehicle. Thus, the vehicle can travel only after the reaction force control device 40 has transitioned to the assistance start waiting state that is a state in which the reaction force control device 40 can execute the reaction force control. Therefore, a situation can be avoided where the vehicle reaches a state of being able to travel despite the reaction force control device 40 being in the middle of execution of the preparation process. Moreover, the vehicle can start traveling in a state that is safer for the driver, i.e., a state where the vehicle can turn to the driver's intended directions.

- In the case where the reaction force control device 40 functions to execute the above-described start permission determination process, in step S101 of the flowchart of FIG. 5, each of the control circuits 41A, 42A, 51A, 52A may determine whether reset has occurred as follows. Each control circuit determines that reset has occurred when the preparation completion signal S1 is in an on state immediately after the control circuit starts. The reaction force control device 40 turns the start permission signal for the vehicle control device 60 on only when the start-up sequence has been normally completed. Thus, it is only when the control circuit has been reset that the preparation completion signal S1 is on immediately after the control circuit starts.

- The order of processing of step S103 and step S104 in the flowchart of FIG. 5 may be reversed.
- Depending on the product specifications etc., in the case of the single-system driving mode, each control circuit may be configured not to execute the process for stopping the reaction force motor 21 and the turning motor 31 when at least one of the two control circuits 41A, 51A of the first system or the two control systems 42A, 52A of the second system is reset.
- While the reaction force motor 21 and the turning motor 31 each have the dual-system winding sets in the embodiment, these motors may each have a single-system winding set. In this case, the reaction force control device 40 may have only one of the first system circuit 41 and the second system circuit 42. The turning control device 50 may have only one of the first system circuit 51 and the second system circuit 52. In this case, the first reaction force control circuit 41A or the second reaction force control circuit 42A corresponds to the reaction force control circuit. The first turning control circuit 51A or the second turning control circuit 52A corresponds to the turning control circuit.

In the case where the reaction force control device 40 has only the first system circuit 41 and the turning control device 50 has only the first system circuit 51, the following process is executed. For example, in the case where the first reaction force control circuit 41A that is operating normally is reset, the reset first reaction force control circuit 41A executes the process for stopping travel of the vehicle upon restarting after completion of the reset.

In the case where the first reaction force control circuit 41A that is operating normally is reset, the reset first reaction force control circuit 41A stops driving of the reaction force motor 21 that is the control target thereof upon restarting after completion of the reset. The first turning control circuit 51A that is operating normally without being reset stops driving of the turning motor 31 that is the control target thereof in synchronization with the reset first reaction force control circuit 41A.

The same process as described above is executed in the case where the first turning control circuit 51A that is operating normally is reset. Depending on the product specifications etc., the control circuits may be configured not to execute the process for stopping the reaction force motor 21 and the turning motor 31.

## Claims

1. A steering control system comprising a plurality of control circuits configured to control a reaction force motor (21) and a turning motor (31) in coordination with one another, the reaction force motor (21) generating a steering reaction force applied to a steering wheel (11) from which mechanical power transmission to turning wheels (15) of a vehicle is cut off, the turning motor (31) generating a turning force for turning the turning wheels (15),
**characterized in that** when at least one control circuit among the control circuits that are operating normally is reset, the at least one control circuit that is reset is configured to execute a process for stopping travel of the vehicle upon restarting after completion of the reset.

2. The steering control system according to claim 1, wherein:
the at least one control circuit that is reset is configured to execute, upon restarting after completion of the reset, a process for stopping driving of the reaction force motor (21) or the turning motor (31) that is a control target of the at least one control circuit that is reset; and
a control circuit of the control circuits that is operating normally without being reset is configured to execute, in synchronization with the at least one control circuit that is reset, a process for stopping driving of the turning motor (31) or the reaction force motor (21) that is a control target of the control circuit that is operating normally without being reset.

3. The steering control system according to claim 2, wherein the control target of the at least one control circuit that is reset is the reaction force motor (21), and the control target of the control circuit that is operating normally without being reset is the turning motor (31).

4. The steering control system according to claim 2, wherein the control target of the at least one control circuit that is reset is the turning motor (31), and the control target of the control circuit that is operating normally without being reset is the reaction force motor (21).

5. The steering control system according to claim 1, wherein:
the reaction force motor (21) has dual-system winding sets that are a winding set (N11) of a first system and a winding set (N12) of a second system;
the turning motor (31) has dual-system winding sets that are a winding set (N21) of the first system and a winding set (N22) of the second system;
the plurality of control circuits includes
dual-system reaction force control circuits that are a reaction force control circuit of the first system and a reaction force control circuit of the second system, the reaction force control circuit of the first system controlling power supply to the winding set (N11) of the first system included in the reaction force motor (21), the reaction force control circuit of the second system controlling power supply to the winding set (N12) of the second system included in the reaction force motor (21), and
dual-system turning control circuits that are a turning control circuit of the first system and a turning control circuit of the second system, the turning control circuit of the first system controlling power supply to the winding set (N21) of the first system included in the turning motor (31), the turning control circuit of the second system controlling power supply to the winding set (N22) of the second system of the turning motor (31);
each of the plurality of control circuits is configured to have, as a driving mode of the reaction force motor (21) and the turning motor (31), a single-system driving mode in which the reaction force motor (21) and the turning motor (31) are controlled by only the reaction force control circuit and the turning control circuit of one of the first system and the second system; and
in a case where the driving mode is the single-system driving mode, the at least one control circuit that is reset is configured to execute the process when the at least one control circuit among the control circuits that are operating normally is reset.

6. The steering control system according to claim 2, wherein:
the reaction force motor (21) has dual-system winding sets that are a winding set (N11) of a first system and a winding set (N12) of a second system;
the turning motor (31) has dual-system winding sets that are a winding set (N21) of the first system and a winding set (N22) of the second system;
the plurality of control circuits includes
dual-system reaction force control circuits that are a reaction force control circuit of the first system and a reaction force control circuit of the second system, the reaction force control circuit of the first system controlling power supply to the winding set (N11) of the first system included in the reaction force motor (21), the reaction force control circuit of the second system controlling power supply to the winding set (N12) of the second system included in the reaction force motor (21), and
dual-system turning control circuits that are a turning control circuit of the first system and a turning control circuit of the second system, the turning control circuit of the first system controlling power supply to the winding set (N21) of the first system included in the turning motor (31), the turning control circuit of the second system controlling power supply to the winding set (N22) of the second system of the turning motor (31);
each of the plurality of control circuits is configured to have, as a driving mode of the reaction force motor (21) and the turning motor (31), a single-system driving mode in which the reaction force motor (21) and the turning motor (31) are controlled by only the reaction force control circuit and the turning control circuit of one of the first system and the second system; and
in a case where the driving mode is the single-system driving mode, the plurality of control circuits are configured to execute the processes when the at least one control circuit among the control circuits that are operating normally is reset.

7. The steering control system according to claim 1 or claim 2, wherein:
the control circuit of which a control target is the turning motor (31) is configured to control the turning motor (31) such that the turning wheels (15) turn according to an amount of rotating operation of the steering wheel (11);
the control circuit of which a control target is the reaction force motor (21) is configured to execute a specified preparation process at start-up; and
the preparation process includes:
a midpoint learning process of learning a steering neutral position of the steering wheel (11) by making the steering wheel (11) rotate automatically through driving of the reaction force motor (21); and
a steering angle synchronization process of correcting a rotational position of the steering wheel (11) such that the rotational position of the steering wheel (11) becomes a rotational position that corresponds to a turning position of the turning wheels (15).

8. The steering control system according to claim 1 or claim 2, wherein:
each of the control circuits is configured to store information indicating whether control was stopped as a vehicle power source was turned off; and
at start-up, each of the control circuits is configured to determine that the control circuit has not been reset when the information indicating that control was stopped as the vehicle power source was turned off is stored, and determine that the control circuit has been reset when the information indicating that control was stopped as the vehicle power source was turned off is not stored.

## Patentansprüche

1. Lenksteuerungssystem, das eine Vielzahl von Steuerschaltungen umfasst, die konfiguriert sind, um einen Reaktionskraftmotor (21) und einen Drehmotor (31) in Koordination miteinander zu steuern, wobei der Reaktionskraftmotor (21) eine Lenkreaktionskraft erzeugt, die auf ein Lenkrad (11) ausgeübt wird, von dem eine mechanische Kraftübertragung auf gelenkte Räder (15) eines Fahrzeugs unterbrochen ist, wobei der Drehmotor (31) eine Drehkraft zum Drehen der gelenkten Räder (15) erzeugt,
**dadurch gekennzeichnet, dass,** wenn mindestens eine Steuerschaltung aus den Steuerschaltungen, die normal arbeiten, zurückgesetzt wird, die mindestens eine Steuerschaltung, die zurückgesetzt wird, konfiguriert ist, um einen Prozess zum Stoppen der Fahrt des Fahrzeugs bei einem Neustart nach Abschluss des Zurücksetzens auszuführen.

2. Lenksteuerungssystem nach Anspruch 1, wobei:
die mindestens eine Steuerschaltung, die zurückgesetzt wird, konfiguriert ist, um bei einem Neustart nach Abschluss des Zurücksetzens einen Prozess zum Stoppen des Antreibens des Reaktionskraftmotors (21) oder des Drehmotors (31) auszuführen, der ein Steuerungsziel der mindestens einen Steuerschaltung ist, die zurückgesetzt wird; und
eine Steuerschaltung der Steuerschaltungen, die normal arbeitet, ohne zurückgesetzt zu werden, konfiguriert ist, um synchron mit der mindestens einen Steuerschaltung, die zurückgesetzt wird, einen Prozess zum Stoppen des Antreibens des Drehmotors (31) oder des Reaktionskraftmotors (21) auszuführen, der ein Steuerungsziel der Steuerschaltung ist, die normal arbeitet, ohne zurückgesetzt zu werden.

3. Lenksteuerungssystem nach Anspruch 2, wobei das Steuerungsziel der mindestens einen Steuerschaltung, die zurückgesetzt wird, der Reaktionskraftmotor (21) ist und das Steuerungsziel der Steuerschaltung, die normal arbeitet, ohne zurückgesetzt zu werden, der Drehmotor (31) ist.

4. Lenksteuerungssystem nach Anspruch 2, wobei das Steuerungsziel der mindestens einen Steuerschaltung, die zurückgesetzt wird, der Drehmotor (31) ist und das Steuerungsziel der Steuerschaltung, die normal arbeitet, ohne zurückgesetzt zu werden, der Reaktionskraftmotor (21) ist.

5. Lenksteuerungssystem nach Anspruch 1, wobei:
der Reaktionskraftmotor (21) Dualsystem-Wicklungssätze aufweist, die ein Wicklungssatz (N11) eines ersten Systems und ein Wicklungssatz (N12) eines zweiten Systems sind;
der Drehmotor (31) Dualsystem-Wicklungssätze aufweist, die ein Wicklungssatz (N21) des ersten Systems und ein Wicklungssatz (N22) des zweiten Systems sind;
wobei die Vielzahl von Steuerschaltungen Folgendes beinhaltet:
Dualsystem-Reaktionskraftsteuerschaltungen, die eine Reaktionskraftsteuerschaltung des ersten Systems und eine Reaktionskraftsteuerschaltung des zweiten Systems sind, wobei die Reaktionskraftsteuerschaltung des ersten Systems die Stromversorgung zu dem Wicklungssatz (N11) des ersten Systems steuert, der in dem Reaktionskraftmotor (21) enthalten ist, wobei die Reaktionskraftsteuerschaltung des zweiten Systems die Stromversorgung zu dem Wicklungssatz (N12) des zweiten Systems steuert, der in dem Reaktionskraftmotor (21) enthalten ist, und
Dualsystem-Drehsteuerschaltungen, die eine Drehsteuerschaltung des ersten Systems und eine Drehsteuerschaltung des zweiten Systems sind, wobei die Drehsteuerschaltung des ersten Systems die Stromversorgung zu dem Wicklungssatz (N21) des ersten Systems steuert, der in dem Drehmotor (31) enthalten ist, wobei die Drehsteuerschaltung des zweiten Systems die Stromversorgung zu dem Wicklungssatz (N22) des zweiten Systems des Drehmotors (31) steuert;
jede der Vielzahl von Steuerschaltungen konfiguriert ist, um als einen Antriebsmodus des Reaktionskraftmotors (21) und des Drehmotors (31) einen Einzelsystem-Antriebsmodus aufzuweisen, in dem der Reaktionskraftmotor (21) und der Drehmotor (31) nur durch die Reaktionskraftsteuerschaltung und die Drehsteuerschaltung von entweder dem ersten System oder dem zweiten System gesteuert werden; und
in einem Fall, in dem der Antriebsmodus der Einzelsystem-Antriebsmodus ist, die mindestens eine Steuerschaltung, die zurückgesetzt wird, konfiguriert ist, um den Prozess auszuführen, wenn die mindestens eine Steuerschaltung aus den Steuerschaltungen, die normal arbeiten, zurückgesetzt wird.

6. Lenksteuerungssystem nach Anspruch 2, wobei:
der Reaktionskraftmotor (21) Dualsystem-Wicklungssätze aufweist, die ein Wicklungssatz (N11) eines ersten Systems und ein Wicklungssatz (N12) eines zweiten Systems sind;
der Drehmotor (31) Dualsystem-Wicklungssätze aufweist, die ein Wicklungssatz (N21) des ersten Systems und ein Wicklungssatz (N22) des zweiten Systems sind;
wobei die Vielzahl von Steuerschaltungen Folgendes beinhaltet:
Dualsystem-Reaktionskraftsteuerschaltungen, die eine Reaktionskraftsteuerschaltung des ersten Systems und eine Reaktionskraftsteuerschaltung des zweiten Systems sind, wobei die Reaktionskraftsteuerschaltung des ersten Systems die Stromversorgung zu dem Wicklungssatz (N11) des ersten Systems steuert, der in dem Reaktionskraftmotor (21) enthalten ist, wobei die Reaktionskraftsteuerschaltung des zweiten Systems die Stromversorgung zu dem Wicklungssatz (N12) des zweiten Systems steuert, der in dem Reaktionskraftmotor (21) enthalten ist, und
Dualsystem-Drehsteuerschaltungen, die eine Drehsteuerschaltung des ersten Systems und eine Drehsteuerschaltung des zweiten Systems sind, wobei die Drehsteuerschaltung des ersten Systems die Stromversorgung zu dem Wicklungssatz (N21) des ersten Systems steuert, der in dem Drehmotor (31) enthalten ist, wobei die Drehsteuerschaltung des zweiten Systems die Stromversorgung zu dem Wicklungssatz (N22) des zweiten Systems des Drehmotors (31) steuert;
wobei jede der Vielzahl von Steuerschaltungen konfiguriert ist, um als einen Antriebsmodus des Reaktionskraftmotors (21) und des Drehmotors (31) einen Einzelsystem-Antriebsmodus aufzuweisen, in dem der Reaktionskraftmotor (21) und der Drehmotor (31) nur durch die Reaktionskraftsteuerschaltung und die Drehsteuerschaltung von entweder dem ersten System oder dem zweiten System gesteuert werden; und
in einem Fall, in dem der Antriebsmodus der Einzelsystem-Antriebsmodus ist, die Vielzahl von Steuerschaltungen konfiguriert ist, um die Prozesse auszuführen, wenn die mindestens eine Steuerschaltung aus den Steuerschaltungen, die normal arbeiten, zurückgesetzt wird.

7. Lenksteuerungssystem nach Anspruch 1 oder Anspruch 2, wobei:
die Steuerschaltung, deren Steuerungsziel der Drehmotor (31) ist, konfiguriert ist, um den Drehmotor (31) so zu steuern, dass sich die gelenkten Räder (15) gemäß einem Drehbetätigungsbetrag des Lenkrads (11) drehen;
die Steuerschaltung, deren Steuerungsziel der Reaktionskraftmotor (21) ist, konfiguriert ist, um beim Starten einen spezifizierten Vorbereitungsprozess auszuführen; und
der Vorbereitungsprozess Folgendes beinhaltet:
einen Mittelpunktlernprozess zum Lernen einer Lenkneutralposition des Lenkrads (11), indem das Lenkrad (11) durch Antreiben des Reaktionskraftmotors (21) automatisch gedreht wird; und
einen Lenkwinkelsynchronisationsprozess zum Korrigieren einer Drehposition des Lenkrads (11), so dass die Drehposition des Lenkrads (11) eine Drehposition wird, die einer Drehposition der gelenkten Räder (15) entspricht.

8. Lenksteuerungssystem nach Anspruch 1 oder Anspruch 2, wobei:
jede der Steuerschaltungen konfiguriert ist, um Informationen zu speichern, die angeben, ob die Steuerung beim Ausschalten der Fahrzeugenergiequelle gestoppt wurde; und
jede der Steuerschaltungen konfiguriert ist, um beim Starten zu bestimmen, dass die Steuerschaltung nicht zurückgesetzt wurde, wenn die Informationen, die angeben, dass die Steuerung beim Ausschalten der Fahrzeugenergiequelle gestoppt wurde, gespeichert sind, und zu bestimmen, dass die Steuerschaltung zurückgesetzt wurde, wenn die Informationen, die angeben, dass die Steuerung beim Ausschalten der Fahrzeugenergiequelle gestoppt wurde, nicht gespeichert sind.

## Revendications

1. Système de commande de direction comprenant une pluralité de circuits de commande configurés pour commander un moteur de force de réaction (21) et un moteur de direction (31) en coordination l'un avec l'autre, le moteur de force de réaction (21) générant une force de réaction de direction appliquée à un volant (11) à partir duquel la transmission de puissance mécanique aux roues directrices (15) d'un véhicule est coupée, le moteur de direction (31) générant une force de direction pour faire tourner les roues directrices (15),
**caractérisé en ce que** lorsqu'au moins un circuit de commande parmi les circuits de commande qui fonctionnent normalement est réinitialisé, le au moins un circuit de commande réinitialisé est configuré pour exécuter un processus d'arrêt du déplacement du véhicule lors du redémarrage après la fin de la réinitialisation.

2. Système de commande de direction selon la revendication 1, dans lequel :
le au moins un circuit de commande qui est réinitialisé est configuré pour exécuter, lors du redémarrage après la fin de la réinitialisation, un processus d'arrêt de l'entraînement du moteur de force de réaction (21) ou du moteur de rotation (31) qui est une cible de commande du au moins un circuit de commande réinitialisé ; et
un circuit de commande des circuits de commande qui fonctionne normalement sans être réinitialisé est configuré pour exécuter, en synchronisation avec le au moins un circuit de commande qui est réinitialisé, un processus d'arrêt de l'entraînement du moteur de rotation (31) ou du moteur de force de réaction (21) qui est une cible de commande du circuit de commande qui fonctionne normalement sans être réinitialisé.

3. Système de commande de direction selon la revendication 2, dans lequel la cible de commande du au moins un circuit de commande qui est réinitialisé est le moteur de force de réaction (21), et la cible de commande du circuit de commande qui fonctionne normalement sans être réinitialisé est le moteur de rotation (31).

4. Système de commande de direction selon la revendication 2, dans lequel la cible de commande du au moins un circuit de commande qui est réinitialisé est le moteur de direction (31), et la cible de commande du circuit de commande qui fonctionne normalement sans être réinitialisé est le moteur de force de réaction (21).

5. Système de commande de direction selon la revendication 1, dans lequel :
le moteur de force de réaction (21) présente des ensembles d'enroulements à double système qui sont un ensemble d'enroulements (N11) d'un premier système et un ensemble d'enroulements (N12) d'un second système ;
le moteur de rotation (31) présente des ensembles d'enroulements à double système qui sont un ensemble d'enroulements (N21) du premier système et un ensemble d'enroulements (N22) du second système ;
la pluralité des circuits de commande incluent :
des circuits de commande de force de réaction à double système qui sont un circuit de commande de force de réaction du premier système et un circuit de commande de force de réaction du second système, le circuit de commande de force de réaction du premier système commandant l'alimentation électrique de l'enroulement (N11) du premier système inclus dans le moteur de force de réaction (21), le circuit de commande de force de réaction du second système commandant l'alimentation électrique de l'enroulement (N12) du second système inclus dans le moteur de force de réaction (21), et
des circuits de commande de rotation à double système qui sont un circuit de commande de rotation du premier système et un circuit de commande de rotation du second système, le circuit de commande de rotation du premier système commandant l'alimentation électrique de l'ensemble d'enroulements (N21) du premier système inclus dans le moteur de rotation (31), le circuit de commande de rotation du second système commandant l'alimentation électrique de l'ensemble d'enroulements (N22) du second système du moteur de rotation (31) ;
chacun des circuits de commande pluriels est configuré pour présenter, comme mode de fonctionnement du moteur de force de réaction (21) et du moteur de rotation (31), un mode de fonctionnement monosystème dans lequel le moteur de force de réaction (21) et le moteur de rotation (31) sont commandés uniquement par le circuit de commande de force de réaction et le circuit de commande de rotation de l'un des deux systèmes (le premier et le second) ; et
dans le cas où le mode de conduite est le mode de conduite à système unique, le au moins un circuit de commande qui est réinitialisé est configuré pour exécuter le processus lorsqu'au moins un circuit de commande parmi les circuits de commande qui fonctionnent normalement est réinitialisé.

6. Système de commande de direction selon la revendication 2, dans lequel :
le moteur de force de réaction (21) présente des ensembles d'enroulements à double système qui sont un ensemble d'enroulements (N11) d'un premier système et un ensemble d'enroulements (N12) d'un second système ;
le moteur de rotation (31) présente des ensembles d'enroulements à double système qui sont un ensemble d'enroulements (N21) du premier système et un ensemble d'enroulements (N22) du second système ;
la pluralité des circuits de commande incluent :
des circuits de commande de force de réaction à double système qui sont un circuit de commande de force de réaction du premier système et un circuit de commande de force de réaction du second système, le circuit de commande de force de réaction du premier système commandant l'alimentation électrique de l'enroulement (N11) du premier système inclus dans le moteur de force de réaction (21), le circuit de commande de force de réaction du second système commandant l'alimentation électrique de l'enroulement (N12) du second système inclus dans le moteur de force de réaction (21), et
des circuits de commande de rotation à double système qui sont un circuit de commande de rotation du premier système et un circuit de commande de rotation du second système, le circuit de commande de rotation du premier système commandant l'alimentation électrique de l'ensemble d'enroulements (N21) du premier système inclus dans le moteur de rotation (31), le circuit de commande de rotation du second système commandant l'alimentation électrique de l'ensemble d'enroulements (N22) du second système du moteur de rotation (31) ;
chacun des circuits de commande pluriels est configuré pour présenter, comme mode de fonctionnement du moteur de force de réaction (21) et du moteur de rotation (31), un mode de fonctionnement monosystème dans lequel le moteur de force de réaction (21) et le moteur de rotation (31) sont commandés uniquement par le circuit de commande de force de réaction et le circuit de commande de rotation de l'un des deux systèmes (le premier et le second) ; et
dans le cas où le mode de conduite est le mode de conduite à système unique, la pluralité de circuits de commande sont configurés pour exécuter les processus lorsqu'au moins un circuit de commande parmi les circuits de commande qui fonctionnent normalement est réinitialisé.

7. Système de commande de direction selon la revendication 1 ou la revendication 2, dans lequel :
le circuit de commande dont la cible de commande est le moteur de rotation (31) est configuré pour commander le moteur de rotation (31) de telle sorte que les roues de rotation (15) tournent en fonction d'une quantité de rotation du volant (11) ;
le circuit de commande dont la cible est le moteur de force de réaction (21) est configuré pour exécuter un processus de préparation spécifié au démarrage ; et
le processus de préparation inclut :
un processus d'apprentissage intermédiaire consistant à apprendre une position neutre de direction du volant (11) en faisant tourner automatiquement le volant (11) grâce à l'actionnement du moteur de force de réaction (21) ; et
un processus de synchronisation d'angle de direction corrigeant une position de rotation du volant (11) de sorte que la position de rotation du volant (11) devienne une position de rotation qui correspond à une position de rotation des roues tournantes (15).

8. Système de commande de direction selon la revendication 1 ou la revendication 2, dans lequel :
chaque circuit de commande est configuré pour stocker des informations indiquant si la commande a été arrêtée lors de la coupure de l'alimentation électrique du véhicule ; et
au démarrage, chaque circuit de commande est configuré pour déterminer que le circuit de commande n'a pas été réinitialisé lorsque les informations indiquant que la commande a été arrêtée suite à la coupure de l'alimentation du véhicule sont enregistrées, et pour déterminer que le circuit de commande a été réinitialisé lorsque les informations indiquant que la commande a été arrêtée suite à la coupure de l'alimentation du véhicule ne sont pas enregistrées.
